# EUROPEAN PATENT APPLICATION

(11) **EP 2 493 240 A1**
(43) Date of publication of application: **29.08.2012**
(21) Application number: 10835413.5
(22) Date of filing: 01.09.2010
(51) Int. Cl.: H04W 28/08

(54) **OPTIMIZED METHOD AND SYSTEM FOR ACTIVATING AND DEACTIVATING COMPONENT CARRIER IN MULTI-CARRIER SYSTEM**

(30) Priority: 08.12.2009 CN 200910252091
(71) Applicant: ZTE Corporation, Shenzhen, Guangdong 518057 (CN)
(72) Inventor: CHEN, Si, Guangdong 518057 (CN); ZHANG, Jian, Guangdong 518057 (CN); WANG, Guanzhou, Guangdong 518057 (CN)
(74) Representative: Jansen, Cornelis Marinus
(86) International application number: PCT/CN2010/076538
(87) International publication number: WO 2011/069378

(57) **Abstract**

The present disclosure provides an optimized method and system for activating and deactivating a component carrier in a multi-carrier system, the method comprises: when activating a Component Carrier (CC), a base station sends an activation command to a User Equipment (UE) through Downlink Control Information (DCI) to indicate the UE to activate the CC; if receiving the activation command successfully, the UE activates the CC and sends an acknowledgement of the activation command to the base station; when deactivating the CC, the base station sends a deactivation command to the UE through the DCI to indicate the UE to deactivate the CC; if receiving the deactivation command successfully, the UE deactivates the CC and sends an acknowledgement of the deactivation command to the base station. The present disclosure can improve the reliability of activation and deactivation of the carrier aggregation technology in an LTE-A system, and has the advantages such as simple configuration and operation, and keeping the status of CC in the base station and the status of CC in the UE consistent.

## Description

### TECHNICAL FIELD

The present disclosure relates to the field of communications, in particular to an optimized method and system for activating and deactivating a component carrier in a multi-carrier system.

### BACKGROUND

To meet the increasing demands for large-bandwidth high-speed mobile access, the Third Generation Partnership Projects (3GPP) proposes a Long-Term Evolution Advanced (LTE-Advanced or LTE-A) standards. Based on the LTE, the LTE-A employs a series of new technologies to expand the frequency domain and the time domain, in order to increase the frequency spectrum utilization and increase the system capacity or the like. In the LTE-A, the carrier aggregation technology can aggregate two or more Component Carriers (CC) to support boarder frequency bands, for example, reach 100MHz and frequency spectrum aggregation. User Equipment (UE) may receive or send data on one or more CCs simultaneously, and different number of CCs with different bandwidth may be configured and aggregated in downlink or uplink. Each CC corresponds to one Hybrid Automatic Repeat Request (HARQ) entity and a transmission channel. There is one separate Physical Downlink Control Channel (PDCCH) respectively on each downlink CC to indicate the resource allocation on the CC or resource allocation on other CCs, there are cases of downlink resource allocation and uplink grant, and the PDCCH has 0-3bit to indicate the identifier information of CCs. For expanded CCs, there may be no PDCCH, and the indication of the resource allocation for expanded CCs depends on other CCs with PDCCH. In the LTE-A carrier aggregation, there may be a case that one CC serves as the serving cell of the UE to provide functions such as synchronization, access, system information and paging; or, there may be a case that multiple CCs serve as the serving cells of the UE to provide the above functions, one of the serving cells may be set as the primary serving cell, which is used as the preferred or anchor cell for measurement reference, handover and random access. For all or multiple uplink CCs, they may be identical or different amount of Time Adjustment (TA). In a case of identical TA, the UE maintains a same Time Adjustment Timer (TAT) for these CCs. When the TAT runs, it is indicated that these CCs and the network are in the uplink synchronous status, when the TAT times over, it is indicated that these CCs and the network are in the uplink nonsynchronous status. In a case of different TAs, the UE respectively maintains a TAT for a corresponding CC. When the corresponding TAT runs, it is indicated that the CC and the network are in the uplink synchronous status, and when the corresponding TAT times over, it is indicated that the CC and the network are in the uplink nonsynchronous status.

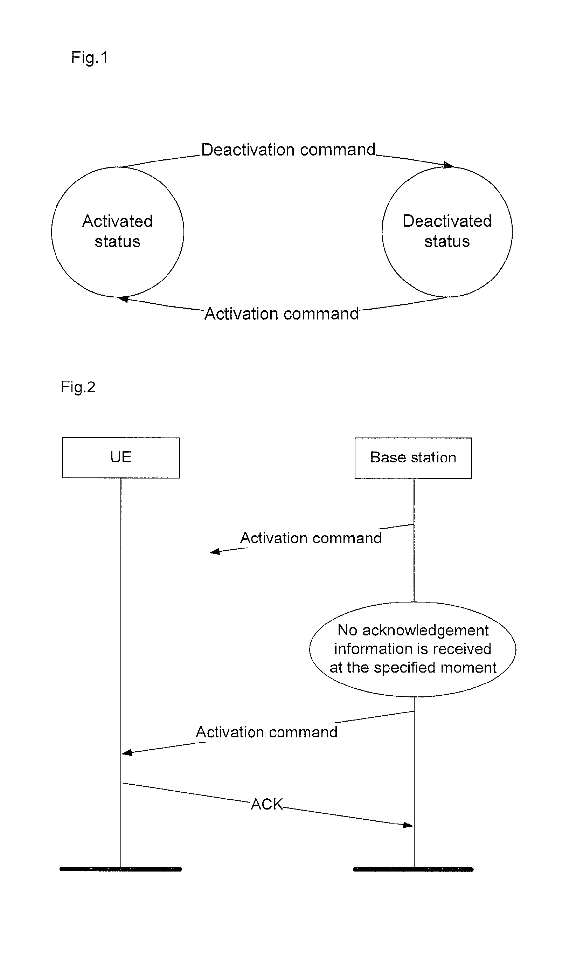

When the demands for bandwidth required by services of the UE decrease, the base station may deactivate some CCs, conversely, when the demands for bandwidth required by services of the UE increase, the base station may activate some CCs. As shown in Fig. 1, when the UE receives a command of deactivating CCs, it sets CCs into the deactivated status; when the UE receives a command of activating CCs, it sets CCs into the activated status. When CCs enter the deactivated status, it is indicated that CCs cannot be scheduled any more; when CCs enter the activated status, it is indicated that CCs can be scheduled again, for CCs configured with Discontinuous Reception (DRX), it means that CCs enter the DRX status again, and for CCs not configured with DRX, it means that CCs enter the activated status to always monitor the PDCCH. There are differences between the deactivation of CCs and the deletion of CCs, although CCs cannot be used for scheduling, in the former, the Radio Resources Control (RRC) configuration information (for example, Physical (PHY), Media Access Control (MAC), or other relevant parameters) of CCs is reserved, but in the latter, the RRC configuration information of CCs is deleted. There are also differences between the deactivated status and the non-activated status in the DRX, the former will not enter the activated status actively, but the latter will enter the activated status when the on duration timer is started or restarted.

At present, the activation command and deactivation command may be transmitted in the following ways: Downlink Control Information (DCI), MAC Control Element (MAC CE), and RRC message. The DCI has best timeliness, however, a main defect of DCI is that the reliability is relatively low. If the PDCCH decoding is failed, the base station sends data on CCs that have not been activated but are considered by the base station itself to be activated, as a result, the UE is unable to receive data; or, the UE does not have to wait for scheduling.

### SUMMARY

The present disclosure provides an optimized method and system for activating and deactivating a component carrier in a multi-carrier system, to improve the reliability of activation and deactivation of the carrier aggregation technology in an LTE-A system.

In order to solve the above technical problem, the present disclosure provides an optimized method for activating and deactivating a component carrier in a multi-carrier system, including:
when activating a CC, a base station sends an activation command to a UE through DCI to indicate the UE to activate the CC; if receiving the activation command successfully, the UE activates the CC and sends an acknowledgement of the activation command to the base station;
when deactivating the CC, the base station sends a deactivation command to the UE through the DCI to indicate the UE to deactivate the CC; if receiving the deactivation command successfully, the UE deactivates the CC and sends an acknowledgement of the deactivation command to the base station.

The method may further include:
after sending the activation command to the UE, if failing to receive the acknowledgement of the activation command at a specified moment, the base station sends the activation command to the UE again;
after sending the deactivation command to the UE, if failing to receive the acknowledgement of the deactivation command at a specified moment, the base station sends the deactivation command to the UE again.

The method may further include:
the base station specifies a CC for transferring the acknowledgement of the activation command through the activation command, or system information or an RRC message;
the base station specifies a CC for transferring the acknowledgement of the deactivation command through the activation command, or the system information or the RRC message.

The present disclosure further provides an optimized method for activating and deactivating a component carrier in a multi-carrier system, including:
when activating a CC, a base station continuously sends an activation command to the UE for many times through DCI to indicate the UE to activate the CC; if receiving the activation command successfully for one or more times, the UE activates the CC;
when deactivating the CC, the base station continuously sends a deactivation command to the UE for many times through the DCI to indicate the UE to deactivate the CC; if receiving the deactivation command successfully for one or more times, the UE deactivates the CC.

The method may further include: if receiving the activation command successfully, the UE sends an acknowledgement of the activation command to the base station; if receiving the deactivation command successfully, the UE sends an acknowledgement of the deactivation command to the base station. The method may further include: the base station specifies a CC for transferring the acknowledgement of the activation command through the activation command, or system information or an RRC message; the base station specifies a CC for transferring the acknowledgement of the deactivation command through the activation command, or the system information or the RRC message.

The present disclosure further provides an optimized method for deactivating a component carrier in a multi-carrier system, include:
the UE maintains one or more timers;
when a timer times over or stops, the UE deactivates one or more CCs corresponding to the timer; or, when the timer times over or stops, the UE reports identifier information of one or more CCs corresponding to the timer to a base station.

The method may further include:
after deactivating the one or more CCs corresponding to the timer, the UE reports the identifier information of the one or more CCs corresponding to the timer to the base station.

The method may further include:
after the UE reports the identifier information of the one or more CCs to the base station, the base station sends a deactivation command and/or a scheduling command corresponding to the one or more CCs to the UE according to the received identifier information.

The method may further have the following feature: the UE reports the identifier information of the one or more CCs in a format of MAC control element.

The method may further have the following feature: the timer is a time adjustment timer, and the time adjustment timer corresponds to one or more CCs having activation and deactivation functions.

The method may further include:
when the timer is an activation timer, the base station notifies the UE of a duration of the activation timer through a system message or an RRC message.

The method may further include: when the timer is an activation time, the UE stops the activation timers under a stopping condition, wherein the stopping condition may include:
the UE receives a deactivation command, and the deactivation command indicates the UE to deactivate a CC corresponding to the activation timer; and/or
a time adjustment timer times over, and one or more CCs corresponding to the overtime time adjustment timer include the CC corresponding to the activation timer.

The method may further include:
when the timer is an activation timer, the UE starts or restarts the activation timer under a starting or restarting condition, wherein the starting or restarting condition may include: the UE receives an activation command, and the activation command indicates the UE to activate a CC corresponding to the activation timer; and/or the UE receives downlink assignment on the CC corresponding to the activation timer; and/or the UE receives uplink grant on the CC corresponding to the activation timer; and/or the UE receives, on the CC corresponding to the activation timer, a non-acknowledgement message indicating that the sending of uplink data is failed; and/or the UE is ready to send uplink data and waits to receive uplink grant on the CC corresponding to the activation timer. In a case that cross carrier scheduling is supported, the condition for starting or restarting the activation timer may further include: the UE receives downlink assignment, and the downlink assignment indicates the UE to receive data on the CC corresponding to the activation timer; and/or the UE receives uplink grant, and the uplink grant indicates that an acknowledgement should be received on the CC corresponding to the activation timer; in a case that DRX is supported, the condition for starting or restarting the activation timer may further include: a drx-InactivityTimer corresponding to the CC which corresponds to the activation timer is started or restarted; and/or a drx-RetransmissionTimer corresponding to any one of downlink HARQ processes of the CC which corresponds to the activation timer is started; in a case that random access is supported, the condition for starting or restarting the activation timer may further include: during competitive random access, a mac-ContentionResolutionTimer is started or restarted; and/or during non-competitive random access, after random access is successful, the UE waits to receive downlink assignment or uplink grant indicating a first transmission.

The method may further include:
when the timer is a deactivation timer, the UE starts or restarts the deactivation timer under a starting or restarting condition, wherein the starting or restarting condition may include: downlink transmission is received successfully on a CC corresponding to the deactivation timer; and/or uplink transmission is sent successfully on the CC corresponding to the deactivation timer.

In a case that DRX is supported, the condition for the UE to start or restart the deactivation timer may further include: a drx-InactivityTimer corresponding to the CC which corresponds to the deactivation timer times over; and/or drx-RetransmissionTimers corresponding to all downlink HARQ processes of the CC which corresponds to the deactivation timer times over.

The method may further include:
when the timer is a deactivation timer, the UE stops the deactivation timer under a stopping condition, wherein the stopping condition may include: the UE receives downlink assignment on the CC corresponding to the deactivation timer; and/or the UE receives uplink grant on the CC corresponding to the deactivation timer; and/or uplink transmission is sent unsuccessfully on the CC corresponding to the deactivation timer; and/or downlink transmission is received unsuccessfully on the CC corresponding to the deactivation timer. In a case that cross carrier scheduling is supported, the condition for the UE to stop the deactivation timer may further include: the UE receives downlink assignment, and the downlink assignment indicates the UE to receive data on the CC corresponding to the deactivation timer; and/or the UE receives uplink grant, and the uplink grant indicates that an acknowledgement should be received on the CC corresponding to the deactivation timer

The present disclosure further provides an optimized method for activating and deactivating a component carrier in a multi-carrier system, comprising:
the UE reports a status of a CC to a base station;
the base station determines whether the received status of the CC is consistent with a status of the CC stored in the base station, if they are not consistent, sends an activation command and/or a deactivation command to the UE.

In the method, the UE may report the status of the CC to the base station in a way of MAC control element. The MAC control element may carry identifier information of a CC which is in an activated status and/or identifier information of a CC which is in a deactivated status, or the MAC control element may carry a bitmap, and the bitmap indicates which CC is in the activated status and/or which CC is in the deactivated status.

In the method, the UE may report the status of the CC to the base station under a following condition: the UE reports the status periodically; and/or the UE receives an activation command or a deactivation command; and/or the UE receives a MAC control element sent by the base station to request the UE to report the status of the CC; and/or stuffing bits of uplink grant are enough to stuff the MAC control element and its MAC sub-header; wherein a priority of a MAC control element transferring the status of the CC with non-stuffing bits may be lower than that of a MAC control element transferring a C-RNTI, lower than that of data from an Uplink Public Control Channel (UL-CCCH), but higher than that of a MAC control element transferring a Buffer Status Report (BSR) with non-stuffing bits; the priority of a MAC control element transferring the status of the CC with stuffing bits may be lower than that of data from a logic channel, and also lower than that of a MAC control element transferring a BSR with stuffing bits. The condition for periodically reporting may be: report is performed when a cycle timer times over; the cycle timer may be started or restarted at each time of reporting; the method may further comprise: the base station notifies the UE of a duration of the cycle timer through a system message or an RRC message.

The present disclosure further provides an optimized system for activating and deactivating a component carrier in a multi-carrier system, comprising a base station and a UE, the base station is configured to: send an activation command to the UE through DCI to indicate the UE to activate a CC; send a deactivation command to the UE through the DCI to indicate the UE to deactivate the CC;
the UE is configured to: if receiving the activation command successfully, activate the CC and send an acknowledgement of the activation command to the base station; if receiving the deactivation command successfully, deactivate the CC and send an acknowledgement of the deactivation command to the base station.

The present disclosure further provides an optimized system for activating and deactivating a component carrier in a multi-carrier system, comprising a base station and a UE, the base station is configured to: continuously send an activation command to the UE for many times through DCI to indicate the UE to activate a CC; continuously send a deactivation command to the UE for many times through the DCI to indicate the UE to deactivate the CC;
the UE is configured to: if receiving the activation command sent by the base station successfully for one or more times, activate the CC; if receiving the deactivation command sent by the base station successfully for one or more times, deactivate the CC.

The present disclosure further provides an optimized system for activating and deactivating a component carrier in a multi-carrier system, comprising a base station and a UE, the UE is configured to: maintain one or more timers, when a timer times over or stops, deactivate one or more CCs corresponding to the timer; or, when the timer times over or stops, report identifier information of one or more CCs corresponding to the timer to the base station;
the base station is configured to send a deactivation command and/or a scheduling command corresponding to the one or more CCs to the UE according to the received identifier information.

The present disclosure further provides an optimized system for activating and deactivating a component carrier in a multi-carrier system, comprising a base station and a UE, the UE is configured to report a status of a CC to the base station;
the base station is configured to determine whether the received status of the CC is consistent with a status of the CC stored in the base station, if they are not consistent, send an activation command and/or a deactivation command to the UE.

The present disclosure can improve the reliability of activation and deactivation of the carrier aggregation technology in an LTE-A system, and has advantages such as simple configuration and operation, and keeping the status of CC in the base station and the status of CC in the UE consistent.

### BRIEF DESCRIPTION OF THE DRAWINGS

Fig. 1 illustrates a status transition between activation and deactivation;
Fig. 2 illustrates a diagram of sending an activation command according to acknowledgement from UE in an embodiment of the present disclosure;
Fig. 3 illustrates a diagram of continuously sending activation commands in an embodiment of the present disclosure;
Fig. 4 illustrates a diagram of sending a deactivation command according to acknowledgement from UE in an embodiment of the present disclosure;
Fig. 5 illustrates a diagram of continuously sending deactivation commands in an embodiment of the present disclosure.

### DETAILED DESCRIPTION

The present disclosure provides several solutions for improving the reliability of activation and deactivation of the carrier aggregation technology in an LTE-A system.

### Method 1: (applicable to both activation and deactivation)

The way of DCI is employed, and the method specifically comprises two implementation ways:

### Way A:

when activating a CC, a base station sends an activation command to UE through DCI to indicate the UE to activate the CC; if receiving the activation command successfully, the UE activates the CC and sends an acknowledgement of the activation command to the base station;
when deactivating the CC, the base station sends a deactivation command to the UE through the DIC to indicate the UE to deactivate the CC; if receiving the deactivation command successfully, the UE deactivates the CC and sends an acknowledgement of the deactivation command to the base station.

### Way B:

when activating the CC, the base station continuously sends an activation command to the UE for many times through the DCI to indicate the UE to activate the CC; if receiving the activation command successfully for one or more times, the UE activates the CC;
when deactivating the CC, the base station continuously sends a deactivation command to the UE for many times through the DCI to indicate the UE to activate the CC; if receiving the deactivation command successfully for one or more times, the UE deactivates the CC.

In both way A and way B,
the activation command and/or deactivation command may activate and/or deactivate one or more CCs respectively, and the activation command needs to contain the identifier information of one or more CCs to be activated; when the deactivation command is not transferred on the deactivated CCs, the deactivation command needs to contain the identifier information of one or more CCs to be deactivated.

### Method 2: (applicable to deactivation)

The way of timer is employed, and the method specifically comprises:
the UE maintains one or more timers;
when a timer times over or stops, the UE deactivates one or more CCs corresponding to the timer; or, when the timer times over or stops, the UE reports the identifier information of one or more CCs corresponding to the timer to the base station.

The base station sends a deactivation command and/or scheduling command corresponding to the one or more CCs to the UE according to the identifier information.

### Method 3: (applicable to both activation and deactivation)

The way of reporting a status of a CC is employed, and the method specifically comprises:
the UE reports a status of a CC to the base station;
the base station determines whether the received status of the CC is consistent with the status of the CC stored in the base station, if they are not consistent, the base station sends an activation command and/or deactivation command to the UE.

The present disclosure will be described in details below with reference to drawings and specific embodiments.

Embodiments of activating CCs:

### Method 1 is employed:

To ensure that the UE can receive the activation command, the base station sends an activation command for one or more times.

Way A: the activation command may be sent according to the acknowledgement from the UE (as shown in Fig. 2), that is, as viewed from the base station, the base station waits to receive the acknowledgement from the UE after sending the activation command, if the base station does not receive the acknowledgement at the specified moment (it means the predetermined time interval between the moment of sending the activation command and the moment of receiving the acknowledgement, a moment commonly indicated by both the moment of sending the activation command and the time interval, for example, 4ms later after sending the activation command), the base station sends the activation command again. As viewed from the UE, the UE performs detection of the activation command on the PDCCH with a Cell Radio Network Temporary Identifier (C-RNTI), if the UE detects the activation command, it is indicated that the activation command is received successfully, the UE activates the CC indicated by the activation command, and sends the acknowledgement of the activation command to the base station at the specified moment (for example, 4ms later after receiving the activation command).

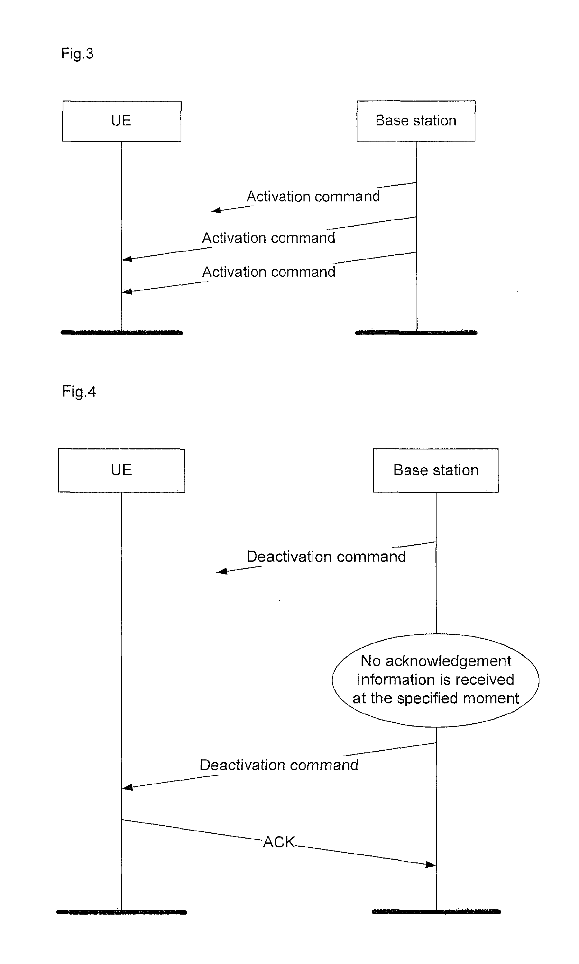

Way B: the activation command may also be sent not according to the acknowledgement from the UE (as shown in Fig. 3), that is, as viewed from the base station, the base station continuously sends an activation command for many times to ensure that UE can receive the activation command successfully. As viewed from the UE, the UE performs detection of the activation command with C-RNTI on the PDCCH of a CC without activation and deactivation functions, if the UE detects the activation command, it is indicated that the activation command is received successfully, and the UE activates the CC indicated by the activation command. In the multiple activation commands sent by the base station, it is indicated that the activation command is received successfully if the UE detects any one of the activation commands. The UE optionally sends the acknowledgement. After the UE detects an activation command to activate a CC, if it still detects activation commands indicating the UE to activate the same CC, it ignores the activation commands.

The base station specifies a CC for transferring the acknowledgement of the activation command through the DCI (for example, indicates in the activation command that on which CC the acknowledgement is transferred), or system message (for example, specifies, in the system message, the fixed matching relation between the CC to be activated and the CC for feeding back successful activation; or specifies, in the system message, the fixed matching relation between the CC for receiving the activation command and the CC for feeding back successful activation), or RRC message (for example, specifies, in the RRC message, the fixed matching relation between the CC to be activated and the CC for feeding back successful activation; or specifies, in the RRC message, the fixed matching relation between the CC for receiving the activation command and the CC for feeding back successful activation).

That is, if the acknowledgement is not transferred on a fixedly CC which is matched with a CC to be activated or a CC for receiving the activation command, then the acknowledgement is transferred through the DCI. If the acknowledgement is transferred on a fixedly CC which is matched with a CC to be activated or a CC for receiving the activation command, then the matching relation may be indicated by the system information or the RRC message.

A newly introduced DCI format or an existing DCI format may be employed for the activation command, wherein part of fields are provided with fixed values. For example, the existing DCI Format 1 is employed for a command to activate a downlink CC, wherein the values of fields "resource block assignment", "HARQ process number", "new data indicator", "redundancy version" and "TPC command for PUCCH" may be 0, and the value of the most significant bit of field "modulation and coding scheme" is 0. For another example, the existing DCI Format 0 is employed for a command to activate an uplink CC, wherein the values of fields "resource block assignment and hopping resource allocation", "new data indicator", "TPC command for PUSCH" and "cyclic shift for DM RS" may be 0, and the value of the most significant bit of field "modulation and coding scheme and redundancy version" is 0.

The activation command carries the identifier information of one or more CCs to activate the one or more CCs.

Method 3 is employed:

When the base station sends an activation command through DCI to indicate the UE to activate a CC, if the UE fails to detect the DCI, then a case in which the base station considers that the CC is in the activated status but the UE considers that the CC is in the deactivated status may occur. The base station schedules the UE to transmit data on the CC, but the UE is unable to transmit data on the CC in the deactivated status, therefore the resources allocated by the base station are wasted.

In this case, the UE reports the status of the CC to the base station, the base station determines whether the received status of the CC is consistent with the status of the CC stored in the base station, if they are not consistent, the base station sends an activation command to the UE, to indicate the UE to make the status of the CC considered by the UE and the status of the CC considered by the base station consistent.

Preferably, the UE reports the status of the CC in a format of MAC control element.

The MAC control element carries identifier information of a CC which is in the activated status and/or identifier information of a CC which is in the deactivated status, or the MAC control element carries a bitmap, and the bitmap indicates which CC is in the activated status and/or which CC is in the deactivated status.

The base station may know, for the UE, which CCs have been activated and which CCs have been deactivated, according to the reported status of CCs.

Conditions for the UE to report the status of a CC to the base station at least include one of the followings:
1) the UE reports the status periodically;
2) the UE receives an activation command or a deactivation command;
3) the UE receives a MAC control element sent by the base station to request the UE to report the status of a CC;
4) the stuffing bits of the uplink grant are enough to stuff the MAC control element and its MAC sub-header.

The periodically reporting refers to: report is performed when a cycle timer times over; the cycle timer is started or restarted at each time of reporting, and the base station notifies the UE of the duration of the cycle timer through a system message (for example, SIB2) or an RRC message (for example, RRC connection reconfiguration message).

That is, the UE may report the status information of a CC actively. For example, the UE itself maintains a timer (cycle timer), and the UE reports a current status of a CC when the timer times over. In addition, in a case of sufficient uplink resources, the UE may also report the current status of the CC. The UE may also report the status information of the CC passively. For example, the base station requests the UE to report the status information of a CC when sending a message (for example, MAC control element) on any one of CCs which are in the activated status. The UE reports the status of the CC when receiving the message. In addition, an activation command may also trigger the UE to report the status information of the CC, which is considered as acknowledgement of the activation command.

The priority of a MAC control element transferring the status of a CC with non-stuffing bits (that is, in allusion to 1)~3) of conditions for the UE to report the status of a CC to the base station) is lower than that of a MAC control element transferring a C-RNTI, lower than that of data from a UL-CCCH, but higher than that of a MAC control element transferring a BSR with non-stuffing bits.

The priority of a MAC control element transferring the status of a CC with stuffing bits (that is, in allusion to 4) of conditions for the UE to report the status of a CC to the base station) is lower than that of data from a logic channel, and also lower than that of a MAC control element transferring a BSR with stuffing bits.

Embodiments of deactivating CCs:

Method 1 is employed:

The processing is similar to that of activating CCs.

To ensure that the UE can receive the deactivation command, the base station sends a deactivation command for one or more times.

Way A: the deactivation command may be sent according to the acknowledgement from the UE (as shown in Fig. 4), that is, as viewed from the base station, the base station waits to receive the acknowledgement from the UE after sending the deactivation command, if the base station receives the acknowledgement at the specified moment (it means the predetermined time interval between the moment of sending the deactivation command and the moment of receiving the acknowledgement, a moment commonly indicated by both the moment of sending the deactivation command and the time interval, for example, 4ms later after sending the deactivation command), the base station considers that the deactivation is successful, if the base station does not receive the acknowledgement, the base station sends the deactivation command again or does not send the deactivation command. As viewed from the UE, the UE performs detection of the deactivation command on the PDCCH with the C-RNTI, if the UE detects the deactivation command, it is indicated that the deactivation command is received successfully, the UE deactivates the CC indicated by the deactivation command, and sends the acknowledgement of the deactivation command to the base station at the specified moment (for example, 4ms later after receiving the deactivation command).

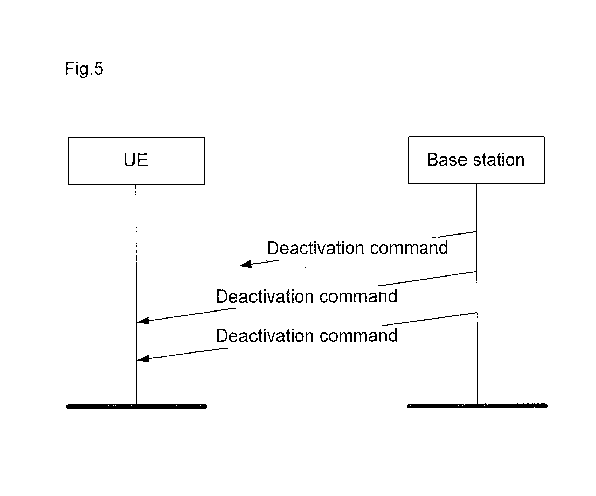

Way B: the activation command may also be sent not according to the acknowledgement from the UE (as shown in Fig. 5), that is, as viewed from the base station, the base station continuously sends an deactivation command for many times to ensure that UE can receive the deactivation command successfully. As viewed from the UE, the UE performs detection of the deactivation command on the PDCCH with the C-RNTI, if the UE detects the deactivation command, it is indicated that the deactivation command is received successfully, and the UE deactivates the CC indicated by the deactivation command. In the multiple deactivation commands sent by the base station, it is indicated that the deactivation command is received successfully if the UE detects any one of the deactivation commands. The UE optionally sends the acknowledgement. After the UE detects a deactivation command to activate a CC, if it still detects deactivation commands indicating the UE to activate the same CC, it ignores the deactivation commands.

The base station specifies a CC for transferring the acknowledgement of the deactivation command through the DCI (for example, indicates in the deactivation command that on which CC the acknowledgement is transferred), or system message (for example, specifies, in the system message, the fixed matching relation between the CC for receiving the deactivation command and the CC for feeding back successful deactivation), or RRC message (for example, specifies, in the RRC message, the fixed matching relation between the CC for receiving the deactivation command and the CC for feeding back successful deactivation).

A newly introduced DCI format or an existing DCI format may be employed for the deactivation command. For example, the existing DCI Format 1 is employed for a command to deactivate a downlink CC, wherein the values of fields "resource block assignment", "HARQ process number", "new data indicator", "redundancy version" and "TPC command for PUCCH" may be 0, and the value of the most significant bit of field "modulation and coding scheme" is 0. For another example, the existing DCI Format 0 is employed for a command to deactivate an uplink CC, wherein the values of fields "resource block assignment and hopping resource allocation", "new data indicator", "TPC command for PUSH" and "cyclic shift for DM RS" may be 0, and the value of the most significant bit of field "modulation and coding scheme and redundancy version" is 0.

When the deactivation command is transferred by the CC indicated by the deactivation command and is used for deactivating only one CC (i.e., the CC transferring the deactivation command), the deactivation command may not carry the identifier information of the CC. When the deactivation command is not transferred by the CC indicated by the deactivation command, or the deactivation command is used for deactivating a plurality of CCs, the deactivation command carries the identifier information of one or more CCs to deactivate one or more CCs.

Method 2 is employed:

The UE maintains one or more timers. When a timer times over or stops, the UE deactivates one or more CCs corresponding to the timer; or, when the timer times over or stops, the UE reports the identifier information of one or more CCs corresponding to the timer to the base station.

Preferably, after deactivating one or more CCs corresponding to the timer, the UE sends a message to the base station to notify the base station of the identifier information of one or more deactivated CCs.

Preferably, when the base station receives the message carrying the identifier information of one or more CCs, it sends a deactivation command and/or scheduling command corresponding to the CCs to the UE according to the identifier information.

The message is in a format of MAC control element.

The timer may be a TAT, an activation timer or a deactivation timer.

(1) When the timer is a TAT:
the time adjustment timer corresponds to one or more CCs having activation and deactivation functions.

If the UE maintains only one TAT, when the TAT times over or stops, the UE deactivates all CCs having activation and deactivation functions, and optionally reports the identifier information of the deactivated CCs to the base station after performing random access to restore uplink synchronization on CCs having neither activation nor deactivation functions (for example, providing random access function).

When the UE maintains a plurality of TATs, when some TATs time over or stop, the UE deactivates one or more CCs having activation and deactivation functions corresponding to the some TATs, and optionally reports the identifier information of the deactivated CCs to the base station on CCs having neither activation nor deactivation functions or on CCs which are in the activated status.

(2) When the timer is a newly introduced timer ("activation timer"):

The activation timer corresponds to one CC, and the CC has activation and deactivation functions.

The CC corresponding to the deactivation timer does not include: CC as the serving cell of the UE; CC as the primary serving cell of the UE; C C as the special cell of the UE; CC as the anchor CC; CC providing synchronization, and/or access, and/or system information, and/or paging functions; CC preferably used for measurement reference, and/or handover, and/or random access; and CC providing security input parameters and/or information of non-access stratum mobility management.

When the activation timer times over, the UE deactivates a CC corresponding to the activation timer, and optionally reports the identifier information of the deactivated CC to the base station; or, the UE reports the identifier information of the CC to be deactivated to the base station, and waits for further command processing from the base station, for example, a deactivation command sent by the base station, then the UE deactivates the CC according to the deactivation command. If the UE sends the report to the base station on the deactivated CC or on the CC to be deactivated, it may not carry the identifier information of the deactivated CC or the CC to be deactivated.

The base station notifies the UE of the duration of the activation timer through the system message (for example, SIB2) or RRC message (for example, RRC connection reconfiguration message).

Conditions for the UE to stop an activation time at least include one of the followings: the UE receives a deactivation command indicating the UE to deactivate a CC corresponding to the activation timer, and the deactivation command is explicit and is DCI or a MAC control element or an RRC message; or, a TAT times over (i.e., out of synchronization in uplink), one or more CCs corresponding to the overtime TAT include the CC corresponding to the activation timer.

Conditions for the UE to start or restart an activation timer at least include one of the followings
1) the UE receives an activation command indicating the UE to activate a CC corresponding to the activation timer, and the activation command is explicit or implicit and is DCI or a MAC control element or an RRC message;
2) the UE receives, on a CC corresponding to the activation timer, downlink assignment indicating first transmission or retransmission, indicating the UE to receive data on the CC corresponding to the activation timer;
3) the UE receives, on a CC corresponding to the activation timer, uplink grant indicating first transmission or retransmission;
4) the UE receives, on a CC corresponding to the activation timer, a Non-Acknowledgement (NACK) indicating that the sending of uplink data is failed;
5) the UE is ready to send the uplink data and waits to receive the uplink grant on a CC corresponding to the activation timer.

In a case that cross carrier scheduling is supported, conditions for the UE to start or restart an activation timer at least further include one of the followings:
1) the UE receives downlink assignment (including indicating first transmission or retransmission), indicating the UE to receive data on the CC corresponding to the activation timer. The downlink assignment may be received on the CC corresponding to the activation timer, or may be received on other CCs;
2) the UE receives uplink grant (including indicating first transmission or retransmission), indicating that the acknowledgement should be received on the CC corresponding to the activation timer. The downlink assignment may be received on the CC corresponding to the activation timer, or may be received on other CCs. The indication of receiving the acknowledgement means: the uplink grant carries the identifier information of the CC corresponding to the activation timer, and indicates to send the acknowledgement on the CC corresponding to the activation timer; or, the uplink grant indicates that which CC sends the uplink data, and indicates, in the system message or RRC message, the CC corresponding to the activation timer to make acknowledgement to the uplink data sent on the CC indicated by the uplink grant.

In a case that DRX is supported, conditions for the UE to start or restart an activation timer at least further include one of the followings:
1) a drx-InactivityTimer corresponding to the CC which corresponds to the activation timer is started or restarted;
2) a drx-RetransmissionTimer corresponding to any one of downlink HARQ processes of the CC which corresponds to the activation timer is started.

In a case that random access is supported, the conditions for the UE to start or restart an activation timer at least further include one of the followings:
1) during the competitive random access, a mac-ContentionResolutionTimer is started or restarted;
2) during the non-competitive random access, after random access is successful, the UE waits to receive downlink assignment or uplink grant indicating the first transmission.

When receiving the deactivation command, the UE stops the timer even if the above conditions for starting or restarting the timer are satisfied.

Wherein, "starting" a timer means: the timer is in the stopped status before being started; while "restarting" a timer means: the timer is in the running status before being restarted.
(3) When the timer is a newly introduced timer ("deactivation timer"):
   the deactivation timer corresponds to one CC, and the CC has activation and deactivation functions.

The CC corresponding to the deactivation timer does not include: CC as the serving cell of the UE; CC as the primary serving cell of the UE; CC as the special cell of the UE; CC as the anchor CC; CC providing synchronization, and/or access, and/or system information, and/or paging functions; CC preferably used for measurement reference, and/or handover, and/or random access; and CC providing security input parameters and/or information of non-access stratum mobility management.

When the timer times over, the UE deactivates the corresponding CC; that is, within the duration of the deactivation timer, if there is no data transmission on one or more CCs having activation and deactivation functions corresponding to the deactivation timer (taking a downlink CC as example, it means that no downlink control information, downlink data and downlink acknowledgement are received), then the UE deactivates the one or more CCs, and optionally report the identifier information of the one or more CCs to the base station; or, the UE reports the identifier information of the one or more CCs to the base station, and waits for further command processing from the base station, for example, a deactivation command sent by the base station, then the UE deactivates the one or more CCs according to the deactivation command. If the UE sends the report on the one or more CCs, it may not carry the identifier information.

The base station notifies the UE of the duration of the deactivation timer through the system message (for example, SIB2) or RRC message (for example, RRC connection reconfiguration message).

Conditions for the UE to start or restart a deactivation timer at least include one of the followings:
1) the downlink transmission is received successfully on the CC corresponding to the deactivation timer (for example, the moment when the UE sends the ACK);
2) the uplink transmission is sent successfully on the CC corresponding to the deactivation timer (for example, the moment when the UE receives the ACK).

In a case that DRX is supported, conditions for the UE to start or restart an activation timer at least further include one of the followings:
1) a drx-InactivityTimer corresponding to the CC which corresponds to the deactivation timer times over;
2) drx-RetransmissionTimers corresponding to all downlink HARQ processes of the CC which corresponds to the deactivation timer times over.

Conditions for the UE to stop the deactivation timer at least include one of the followings:
1) the UE receives uplink grant on the CC corresponding to the deactivation timer;
2) the UE receives downlink assignment on the CC corresponding to the deactivation timer;
3) the uplink transmission is sent unsuccessfully on the CC corresponding to the deactivation timer (for example, the moment when the NACK is received).
4) the downlink transmission is received unsuccessfully on the CC corresponding to the deactivation timer (for example, the moment when the NACK is sent).

In a case that cross carrier scheduling is supported, conditions for the UE to stop the deactivation timer at least further include one of the followings:
1) the UE receives downlink assignment (including indicating first transmission or retransmission), indicating the UE to receive data on the CC corresponding to the deactivation timer. The downlink assignment may be received on the CC corresponding to the deactivation timer, or may be received on other CCs;
2) the UE receives uplink grant (including indicating first transmission or retransmission), indicating that the acknowledgement should be received on the CC corresponding to the deactivation timer. The downlink assignment may be received on the CC corresponding to the deactivation timer, or may be received on other CCs. The indication of receiving the acknowledgement means: the uplink grant carries the identifier information of the CC corresponding to the deactivation timer, and indicates to send the acknowledgement on the CC corresponding to the deactivation timer; or, the uplink grant indicates that which CC sends the uplink data, and indicates, in the system message or RRC message, the CC corresponding to the deactivation timer to make acknowledgement to the uplink data sent on the CC indicated by the uplink grant.

Method 3 is employed:

The processing is similar to that of activating CCs.

When the base station sends a deactivation command to indicate the UE to deactivate a CC, if the UE fails to detect the deactivation command, then a case in which the base station considers that the CC is in the deactivated status while the UE considers that the CC is in the activated status may occur. The base station will not schedule the UE, while the UE is always waiting for the scheduling of the base station; as a result, the UE consumes power.

In this case, the UE reports the status of the CC to the base station, the base station determines whether the received status of the CC is consistent with the status of the CC stored in the base station, if they are not consistent, it sends a deactivation command corresponding to the status of the CC to the UE, to indicate the UE to make the status of the CC considered by the UE and the status of the CC considered by the base station consistent.

Preferably, the UE reports the status of the CC in a format of MAC control element.

The MAC control element carries identifier information of a CC which is in the activated status and/or identifier information of a CC which is in the deactivated status, or the MAC control element carries a bitmap, and the bitmap indicates which CC is in the activated status and/or which CC is in the deactivated status.

The base station may know, for the UE, which CCs have been activated and which CCs have been deactivated, according to the reported status of CCs.

Conditions for the UE to report the status of a CC to the base station at least include one of the followings:
1) the UE reports the status periodically;
2) the UE receives an activation command or a deactivation command;
3) the UE receives a MAC control element sent by the base station to request the UE to report the status of a CC;
4) the stuffing bits of the uplink grant are enough to stuff the MAC control element and its MAC sub-header.

The periodically reporting refers to: report is performed when a cycle timer times over; the cycle timer is started or restarted at each time of reporting, and the base station notifies the UE of the duration of the cycle timer through a system message (for example, SIB2) or an RRC message (for example, RRC connection reconfiguration message).

That is, the UE may report the status information of a CC actively. For example, the UE itself maintains a timer (cycle timer), and the UE reports a current status of a CC when the timer times over. In addition, in a case of sufficient uplink resources, the UE may also report the current status of the CC. The UE may also report the status information of the CC passively. For example, the base station requests the UE to report the status information of a CC when sending a message (for example, MAC control element) on any one of CCs which are in the activated status. The UE reports the status of the CC when receiving the message. In addition, a deactivation command may also trigger the UE to report the status information of the CC, which is considered as acknowledgement of the deactivation command.

The priority of a MAC control element transferring the status of a CC with non-stuffing bits is lower than that of a MAC control element transferring a C-RNTI, lower than that of data from a UL-CCCH, but higher than that of a MAC control element transferring a BSR with non-stuffing bits.

The priority of a MAC control element transferring the status of a CC with stuffing bits is lower than that of data from a logic channel, and also lower than that of a MAC control element transferring a BSR with stuffing bits.

Supplements to above three methods:

The identifier information means the frequency point of a CC, and/or index of a CC, and/or Physical Cell Identifier (PCI), and/or E-UTRAN Cell Global Identifier (ECGI).

If a CC is activated and/or deactivated, another CC which is matched with the CC is also activated and/or deactivated correspondingly, or kept in the original status.

CCs having no activation and deactivation functions are at least one of the following s:
CC as the serving cell of the UE; CC as the primary serving cell of the UE; CC as the special cell of the UE; CC as the anchor CC; CC providing synchronization, and/or access, and/or system information, and/or paging functions; CC preferably used for measurement reference, and/or handover, and/or random access; and CC providing security input parameters and/or information of non-access stratum mobility management.

In the embodiment of the present disclosure, an optimized system for activating and deactivating a component carrier in a multi-carrier system comprises a base station and a UE, the base station is configured to: send an activation command to the UE through DCI to indicate the UE to activate the CC; and send a deactivation command to the UE through the DCI to indicate the UE to deactivate the CC;
the UE is configured to: if receiving the activation command successfully, activate the CC and send an acknowledgement of the activation command to the base station; if receiving the deactivation command successfully, deactivate the CC and send an acknowledgement of the deactivation command to the base station.

In the embodiment of the present disclosure, an optimized system for activating and deactivating a component carrier in a multi-carrier system comprises a base station and a UE, the base station is configured to: continuously send an activation command to the UE for many times through DCI to indicate the UE to activate the CC; and continuously send a deactivation command to the UE for many times through the DCI to indicate the UE to deactivate the CC;
the UE is configured to: if receiving the activation command sent by the base station successfully for one or more times, activate the CC; if receiving the deactivation command sent by the base station successfully for one or more times, deactivate the CC.

In the embodiment of the present disclosure, an optimized system for activating and deactivating a component carrier in a multi-carrier system comprises a base station and a UE, the UE is configured to: maintain one or more timers, when a timer times over or stops, deactivate one or more CCs corresponding to the timer; or, when the timer times over or stops, report identifier information of one or more CCs corresponding to the timer to the base station;
the base station is configured to send a deactivation command and/or a scheduling command corresponding to the one or more CCs to the UE according to the received identifier information.

In the embodiment of the present disclosure, an optimized system for activating and deactivating a component carrier in a multi-carrier system comprises a base station and a UE,
the UE is configured to report a status of a CC to the base station;
the base station is configured to determine whether the received status of the CC is consistent with a status of CC stored in the base station, if they are not consistent, send an activation command and/or deactivation command to the UE.

From the above descriptions, it can be known that the present disclosure proposes a solution for improving the reliability of activation and deactivation of the carrier aggregation technology in an LTE-A system, and the method has advantages such as simple configuration and operation, and keeping the status of CC in the base station and the status of CC in the UE consistent.

Of course, the present disclosure may also have other various embodiments. For those skilled in the art, the present disclosure may have various corresponding changes and modifications within the principle of the present disclosure, and these corresponding changes and modifications should be included within the protection scope of appended claims in the present disclosure.

### INDUSTRIAL APPLICABILITY

Compared with the prior art, the present disclosure can improve the reliability of activation and deactivation of the carrier aggregation technology in an LTE-A system, and has advantages such as simple configuration and operation, and keeping the status of CC in the base station and the status of CC in the UE consistent.

## Claims

1. An optimized method for activating and deactivating a component carrier in a multi-carrier system, comprising:
when activating a Component Carrier (CC), sending, by a base station, an activation command to a User Equipment (UE) through Downlink Control Information (DCI) to indicate the UE to activate the CC; if the UE receives the activation command successfully, activating the CC and sending an acknowledgement of the activation command to the base station by the UE;
when deactivating the CC, sending, by the base station, a deactivation command to the UE through the DCI to indicate the UE to deactivate the CC; if receiving the deactivation command successfully, deactivating the CC and sending an acknowledgement of the deactivation command to the base station by the UE.

2. The method according to claim 1, further comprising:
after the base station sends the activation command to the UE, if the base station fails to receive the acknowledgement of the activation command at a specified moment, sending, by the base station, the activation command to the UE again;
after the base station sends the deactivation command to the UE, if the base station fails to receive the acknowledgement of the deactivation command at a specified moment, sending, by the base station, the deactivation command to the UE again.

3. The method according to claim 1, wherein the base station specifies a CC for transferring the acknowledgement of the activation command through the activation command, or system information or a Radio Resources Control (RRC) message;
the base station specifies a CC for transferring the acknowledgement of the deactivation command through the activation command, or the system information or the RRC message.

4. An optimized method for activating and deactivating a component carrier in a multi-carrier system, comprising:
when activating a Component Carrier (CC), sending continuously, by a base station, an activation command to a UE for many times through Downlink Control Information (DCI) to indicate the UE to activate the CC; if the UE receives the activation command successfully for one or more times, activating the CC by the UE;
when deactivating the CC, sending, by the base station, a deactivation command to the UE for many times through the DCI to indicate the UE to deactivate the CC; if the UE receives the deactivation command successfully for one or more times, deactivating the CC by the UE.

5. The method according to claim 4, further comprising:
if the UE receives the activation command successfully, sending, by the UE, an acknowledgement of the activation command to the base station;
if the UE receives the deactivation command successfully, sending, by the UE, an acknowledgement of the deactivation command to the base station.

6. The method according to claim 5, wherein the base station specifies a CC for transferring the acknowledgement of the activation command through the activation command, or system information or a Radio Resources Control (RRC) message;
the base station specifies a CC for transferring the acknowledgement of the deactivation command through the activation command, or the system information or the RRC message.

7. An optimized method for deactivating a component carrier in a multi-carrier system, comprising:
maintaining, by a UE, one or more timers;
when a timer times over or stops, deactivating, by the UE, one or more CCs corresponding to the timer; or, when the timer times over or stops, reporting, by the UE, identifier information of one or more CCs corresponding to the timer to a base station.

8. The method according to claim 7, further comprising:
after the UE deactivates the one or more CCs corresponding to the timer, reporting, by the UE, the identifier information of the one or more CCs corresponding to the timer to the base station.

9. The method according to claim 7 or 8, further comprising:
after the UE reports the identifier information of the one or more CCs to the base station, sending, by the base station, a deactivation command and/or a scheduling command corresponding to the one or more CCs to the UE according to the received identifier information.

10. The method according to claim 7 or 8, wherein the UE reports the identifier information of the one or more CCs in a format of Media Access Control (MAC) control element.

11. The method according to claim 7, wherein
the timer is a time adjustment timer, and the time adjustment timer corresponds to one or more CCs having activation and deactivation functions.

12. The method according to claim 7, wherein
the timer is an activation timer;
the method further comprising: notifying, by the base station, the UE of a duration of the activation timer through a system message or a Radio Resources Control (RRC) message.

13. The method according to claim 7, wherein,
the timer is an activation timer;
the method further comprising: stopping, by the UE, the activation timer under a stopping condition, wherein the stopping condition includes:
the UE receives a deactivation command, and the deactivation command indicates the UE to deactivate a CC corresponding to the activation timer; and/or
a time adjustment timer times over, and one or more CCs corresponding to the overtime time adjustment timer include the CC corresponding to the activation timer.

14. The method according to claim 7, wherein
the timer is an activation timer;
the method further comprising: starting or restarting, by the UE, the activation timer under a starting or restarting condition, wherein the starting or restarting condition includes:
the UE receives an activation command, and the activation command indicates the UE to activate a CC corresponding to the activation timer; and/or
the UE receives downlink assignment on the CC corresponding to the activation timer; and/or
the UE receives uplink grant on the CC corresponding to the activation timer; and/or
the UE receives, on the CC corresponding to the activation timer, a non-acknowledgement message indicating that the sending of uplink data is failed; and/or
the UE is ready to send uplink data and waits to receive uplink grant on the CC corresponding to the activation timer.

15. The method according to claim 14, wherein
in a case that cross carrier scheduling is supported, the starting or restarting condition further includes:
the UE receives downlink assignment, and the downlink assignment indicates the UE to receive data on the CC corresponding to the activation timer; and/or
the UE receives uplink grant, and the uplink grant indicates that an acknowledgement should be received on the CC corresponding to the activation timer;
in a case that Discontinuous Reception (DRX) is supported, the starting or restarting condition further includes:
a drx-InactivityTimer corresponding to the CC which corresponds to the activation timer is started or restarted; and/or
a drx-RetransmissionTimer corresponding to any one of downlink Hybrid Automatic Repeat Request (HARQ) processes of the CC which corresponds to the activation timer is started;
in a case that random access is supported, the starting or restarting condition further includes:
during competitive random access, a mac-ContentionResolutionTimer is started or restarted; and/or
during non-competitive random access, after random access is successful, the UE waits to receive downlink assignment or uplink grant indicating a first transmission.

16. The method according to claim 7, wherein
the timer is a deactivation timer;
the method further comprising: starting or restarting, by the UE, the deactivation timer under a starting or restarting condition, wherein the starting or restarting condition includes:
downlink transmission is received successfully on a CC corresponding to the deactivation timer; and/or
uplink transmission is sent successfully on the CC corresponding to the deactivation timer.

17. The method according to claim 16, wherein
in a case that DRX is supported, the starting or restarting condition further includes:
a drx-InactivityTimer corresponding to the CC which corresponds to the deactivation timer times over; and/or
drx-RetransmissionTimers corresponding to all downlink HARQ processes of the CC which corresponds to the deactivation timer times over.

18. The method according to claim 7, wherein
the timer is a deactivation timer;
the method further comprising: stopping, by the UE, the deactivation timer under a stopping condition, wherein the stopping condition includes:
the UE receives downlink assignment on the CC corresponding to the deactivation timer; and/or
the UE receives uplink grant on the CC corresponding to the deactivation timer; and/or
uplink transmission is sent unsuccessfully on the CC corresponding to the deactivation timer; and/or
downlink transmission is received unsuccessfully on the CC corresponding to the deactivation timer.

19. The method according to claim 18, wherein
in a case that cross carrier scheduling is supported, the stopping condition further includes:
the UE receives downlink assignment, and the downlink assignment indicates the UE to receive data on the CC corresponding to the deactivation timer; and/or
the UE receives uplink grant, and the uplink grant indicates that an acknowledgement should be received on the CC corresponding to the deactivation timer.

20. An optimized method for activating and deactivating a component carrier in a multi-carrier system, comprising:
reporting, by a UE, a status of a Component Carrier (CC) to a base station;
determining, by the base station, whether the received status of the CC is consistent with a status of the CC stored in the base station, if they are not consistent, sending an activation command and/or a deactivation command to the UE.

21. The method according to claim 20, wherein the UE reports the status of the CC to the base station in a way of Media Access Control (MAC) control element.

22. The method according to claim 21, wherein
the MAC control element carries identifier information of a CC which is in an activated status and/or identifier information of a CC which is in a deactivated status, or the MAC control element carries a bitmap, and the bitmap indicates which CC is in the activated status and/or which CC is in the deactivated status.

23. The method according to claim 21, wherein the UE reports the status of the CC to the base station under a following condition:
the UE reports the status periodically; and/or
the UE receives an activation command or a deactivation command; and/or
the UE receives a MAC control element sent by the base station to request the UE to report the status of the CC; and/or
stuffing bits of uplink grant are enough to stuff the MAC control element and its MAC sub-header;
wherein a priority of a MAC control element transferring the status of the CC with non-stuffing bits is lower than that of a MAC control element transferring a Cell Radio Network Temporary Identifier (C-RNTI), lower than that of data from an Uplink Public Control Channel (UL-CCCH), but higher than that of a MAC control element transferring a Buffer Status Report (BSR) with non-stuffing bits;
the priority of a MAC control element transferring the status of the CC with stuffing bits is lower than that of data from a logic channel, and also lower than that of a MAC control element transferring a BSR with stuffing bits.

24. The method according to claim 23, wherein
the condition for periodically reporting is: report is performed when a cycle timer times over;
the method further comprising: the cycle timer is started or restarted at each time of reporting, and the base station notifies the UE of a duration of the cycle timer through a system message or an RRC message.

25. An optimized system for activating and deactivating a component carrier in a multi-carrier system, comprising a base station and a UE, wherein
the base station is configured to: send an activation command to the UE through DCI to indicate the UE to activate a Component Carrier (CC); send a deactivation command to the UE through the DCI to indicate the UE to deactivate the CC;
the UE is configured to: if receiving the activation command successfully, activate the CC and send an acknowledgement of the activation command to the base station; if receiving the deactivation command successfully, deactivate the CC and send an acknowledgement of the deactivation command to the base station.

26. An optimized system for activating and deactivating a component carrier in a multi-carrier system, comprising a base station and a UE, wherein
the base station is configured to: continuously send an activation command to the UE for many times through DCI to indicate the UE to activate a Component Carrier (CC); continuously send a deactivation command to the UE for many times through the DCI to indicate the UE to deactivate the CC;
the UE is configured to: if receiving the activation command sent by the base station successfully for one or more times, activate the CC; if receiving the deactivation command sent by the base station successfully for one or more times, deactivate the CC.

27. An optimized system for activating and deactivating a component carrier in a multi-carrier system, comprising a base station and a UE, wherein
the UE is configured to: maintain one or more timers, when a timer times over or stops, deactivate one or more CCs corresponding to the timer; or, when the timer times over or stops, report identifier information of one or more CCs corresponding to the timer to the base station;
the base station is configured to send a deactivation command and/or a scheduling command corresponding to the one or more CCs to the UE according to the received identifier information.

28. An optimized system for activating and deactivating a component carrier in a multi-carrier system, comprising a base station and a UE, wherein
the UE is configured to report a status of a CC to the base station;
the base station is configured to determine whether the received status of the CC is consistent with a status of the CC stored in the base station, if they are not consistent, send an activation command and/or a deactivation command to the UE.
